(19) Europäisches Patentamt / European Patent Office / Office européen des brevets

(11) **EP 3 902 661 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **19829644.4**

(22) Anmeldetag: **27.12.2019**

(51) Internationale Patentklassifikation (IPC):
**B29B 7/92** (2006.01)   **B29B 9/12** (2006.01)
**B29C 48/00** (2019.01)   **B29C 48/91** (2019.01)
**B29C 48/92** (2019.01)   B29B 7/48 (2006.01)
B29B 9/06 (2006.01)   B29C 48/08 (2019.01)
B29C 48/10 (2019.01)   B29C 48/40 (2019.01)
B29C 48/76 (2019.01)   B29K 105/00 (2006.01)

(52) Gemeinsame Patentklassifikation (CPC):
**B29C 48/022; B29B 7/92; B29B 9/12; B29C 48/91; B29C 48/92;** B29B 7/48; B29B 9/06; B29C 48/08; B29C 48/10; B29C 48/40; B29C 48/767; B29C 2948/92704; B29C 2948/92942; B29K 2003/00; B29K 2105/0038;   (Forts.)

(86) Internationale Anmeldenummer:
**PCT/EP2019/087058**

(87) Internationale Veröffentlichungsnummer:
**WO 2020/136231 (02.07.2020 Gazette 2020/27)**

(54) **COMPOUND BZW. FOLIE ENTHALTEND THERMOPLASTISCHE STÄRKE SOWIE EIN THERMOPLASTISCHES POLYMER**

COMPOUND OR FILM CONTAINING THERMOPLASTIC STARCH AND A THERMOPLASTIC POLYMER

COMPOSÉ OU FEUILLE COMPORTANT DE L'AMIDON THERMOPLASTIQUE AINSI QU'UN POLYMÈRE THERMOPLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.12.2018 EP 18248136**

(43) Veröffentlichungstag der Anmeldung:
**03.11.2021 Patentblatt 2021/44**

(73) Patentinhaber: **Agrana Stärke GmbH**
**1020 Wien (AT)**

(72) Erfinder:
• **FAHRNGRUBER, Barbara**
**3430 Tulln (AT)**
• **WASTYN, Marnik Michel**
**3430 Tulln (AT)**
• **KOZICH, Martin**
**3430 Tulln (AT)**

(74) Vertreter: **SONN Patentanwälte GmbH & Co KG**
**Riemergasse 14**
**1010 Wien (AT)**

(56) Entgegenhaltungen:
EP-A1- 3 511 373   EP-A2- 0 537 657
EP-A2- 0 596 437   WO-A2-2009/118665
CN-A- 101 235 156   CN-A- 103 159 984
CN-A- 107 955 212   DE-A1- 19 822 979
DE-A1- 19 824 968

(52) Gemeinsame Patentklassifikation (CPC): (Forts.)
    B29K 2105/0088

# EP 3 902 661 B1

**Beschreibung**

Die vorliegende Erfindung betrifft ein Verfahren zur Herstellung eines Compounds enthaltend thermoplastische Stärke, sowie eine aus diesem Compound hergestellte Folie.

Nach gängiger Definition handelt es sich bei thermoplastischer Stärke (im Folgenden auch TPS genannt) um ein amorphes- oder semikristallines Material, bestehend aus aufgeschlossener oder destrukturierter Stärke und einem oder mehreren Weichmachern. TPS kann wiederholt in den plastischen Zustand überführt und wieder ausgehärtet werden, wodurch eine Formgebung unter Einwirkung von Hitze und Scherung möglich ist, was eine Verarbeitung mittels Techniken der Kunststoffindustrie erlaubt. TPS als Werkstoff besitzt üblicherweise hydrophilen Charakter, was eine starke Abhängigkeit der Materialeigenschaften von den klimatischen Umgebungsverhältnissen bedingt. Aus diesem Grund erfolgt nur selten der direkte bzw. alleinige Einsatz von TPS für die Herstellung von Biokunststoffen. Die Verwendung von fein verteilter TPS (disperse Phase) in einer Polymermatrix (kontinuierliche Phase) bietet hingegen die Möglichkeit a) den biobasierten Anteil in Kunststoffformulierungen erheblich zu erhöhen sowie b) in Abhängigkeit von der Wahl des Matrixpolymers eine biologisch abbaubare Komponente zu integrieren. Materialien an welche die Anforderung nach einer vollständigen biologischen Abbaubarkeit oder Kompostierbarkeit gestellt werden, erfordern den Einsatz einer Polymermatrix, welche in biologischem Medium sowie unter Einwirkung von Wasser durch den Einfluss von Mikroorganismen abgebaut bzw. verstoffwechselt werden kann.

Thermoplastische Polymere können durch Temperaturerhöhung wiederholt aufgeschmolzen werden. Nach dem Abkühlen liegen sie in vorwiegend kristalliner oder amorpher Struktur vor. Diese Eigenschaft wird zum Zwecke der Formgebung genutzt. Beispiele für biologisch abbaubare thermoplastische Polymere sind z.B. Polybutylenadipate-co-terephthalat, Polycaprolacton, Polymilchsäure oder Polybutylensuccinat. Native Stärke zeigt dieses Verhalten nicht. Bei der Verarbeitung zu einem thermoplastischen Werkstoff wird die ursprünglich semikristalline, körnige Struktur aufgebrochen, um eine kontinuierliche amorphe Phase zu erzeugen und so Stärke einer Formgebung mit konventionellen Kunststoffverarbeitungsmethoden zugänglich zu machen. Beim Erhitzen über die Verkleisterungstemperatur beginnt Stärke in Gegenwart von Wasser zu quellen. Dabei diffundiert Flüssigkeit in das Innere der Körner und interagiert schließlich mit den freien Hydroxygruppen der Stärkemoleküle. Dadurch werden die Wasserstoffbrückenbindungen gebrochen, das Material verliert an Kristallinität und schließlich beginnen amorphe Bereiche in Lösung zu gehen. Der Prozess wird im Wesentlichen durch den Temperaturverlauf bestimmt.

Bis zu einem Schwellenwert von ca. 50 °C ist der Vorgang weitestgehend reversibel. Bei weiterer Erwärmung setzt irreversibel starke Quellung ein. Der Verlust an Kristallinität führt dazu, dass die Stärkekörner ihre Zwiebelschalenstruktur und die unter dem Mikroskop erkennbare Doppelbrechung verlieren und die Viskosität der Suspension rapide ansteigt. In einem Extrusionsprozess werden alternativ zu Wasser Weichmacher zugesetzt, um den Aufschluss der Stärke unter diesen wasserlimitierten Bedingungen zu erreichen. Durch den Einsatz von Weichmachern wie Glycerin, Sorbit, Erythrit, Polyethylenglycol, unterschiedlichen Mono- und Disacchariden oder Zuckeralkoholen werden, analog der Wirkung von Wasser, zwischenmolekulare Wechselwirkungen durch das Aufbrechen der Wasserstoffbrücken zwischen den Stärkemolekülen reduziert. Der Vorgang im Extruder wird von einer Aufspaltung der Polymerketten und somit einer teilweise stattfindenden Depolymerisation begleitet, wodurch sowohl die Schmelz- als auch die Glasübergangstemperatur bis unter die Degradationstemperatur sinken.

Aus der US 5,362,777 ist die Herstellung thermoplastischer Stärke (TPS) unter Zumischung von Weichmachern, z.B. Sorbit bzw. Sorbitol, bekannt, zur Verbesserung der Fließeigenschaften können auch Pflanzenfette hinzugegeben werden.

Die WO 99/61524 betrifft eine Folie aus einem thermoplastischen Polymergemisch, enthaltend TPS, mindestens ein Polyesterurethan, einen Weichmacher wie z.B. Sorbit, sowie als Gleitmittel Epoxygruppen enthaltende Öle, insbesondere epoxidiertes Leinöl.

Die DE 198 24 968 A1 offenbart ebenfalls eine Folie aus einem thermoplastischen Polymergemisch, enthaltend TPS, mit einem durch Polykondensation oder Polyaddition erhältlichen Polymer, enthaltend Weichmacher, z.B. Sorbit, sowie als Gleitmittel pflanzliche Fette oder Öle.

Gemäß der WO 2012/162085 A1 werden TPS, Öl und/oder Wachs (epoxidiertes Pflanzenöl, bzw. Leinöl) geoffenbart. TPS ist ein Ausgangsprodukt, zwingend nötig für die Verarbeitung von thermoplastischer Stärke ist die Anwesenheit eines weiteren thermoplastischen Polymers.

Die WO 2009/118665 A2 offenbart ein schmelzextrudiertes Substrat, das eine aus einer Stärke gebildete thermoplastische Stärke, Weichmacher und über 10 Gew. % Milchsäure enthält,

Die EP 0 596 437 A2 beschreibt eine biologisch abbaubare Polymermischung, welche im wesentlichen aus Stärke und mindestens einem hydrophoben Polymeren besteht. Das hydrophobe Polymer soll dabei mindestens weitgehendst biologisch abbaubar und thermoplastisch verarbeitbar sein, und die Mischung mit der Stärke soll einen polymeren Phasenvermittler bzw. ein makromolekulares Dispergiermittel umfassen, so dass in der Mischung die Stärke als disperse Phase mit dem hydrophoben Polymer als kontinuierliche Phase vorliegt und der Phasenvermittler bzw. das Dispergiermittel für die molekulare Kopplung der beiden Phasen verantwortlich ist. Als Stärke wird vorzugsweise thermoplastische Stärke verwendet, welche im Wesentlichen unter Ausschluss von Wasser mittels Sorbitol oder Glycerin hergestellt worden ist.

Die WO 2006/042364 A1 schließlich offenbart eine Mischung aus Sorbit und weiterer Weichmacher, z.B. epoxidiertem Leinöl. Stärke ist ein Ausgangsprodukt, abgesehen von der Stärke liegt noch ein wasserlösliches Polymer vor, z.B. Polyvinylalkohol, Polyvinylacetat oder Copolymere von Ethylen- und Vinylalkohol.

Die aus dem oben genannten Stand der Technik bereits bekannte TPS ist, trotz des Zusatzes an Weichmachern, inhärent brüchig und hydrophil. Somit können bei der Verwendung reiner TPS die hohen Anforderungen (Festigkeit, Wasserbeständigkeit), wie sie an technische Produkte in der Folienextrusion gestellt werden, nicht abgedeckt werden.

Aufgrund von starken Viskositätsunterschieden ist eine feine Dispergierung von TPS in einer Polymermatrix nur unter hoher Schereinwirkung effizient (die TPS besitzt eine sehr hohe Viskosität, das Polymer dagegen tendenziell eine niedrige). Im Zuge dessen kann es zu einer mechanischen Schädigung der TPS Phase und einer damit einhergehenden Braunfärbung des Compoundmaterials kommen. Weiters führt die hohe Viskosität der unbehandelten TPS zu einer erschwerten Verarbeitbarkeit, welche sich in gesteigerten Drehmoment- und Druckverhältnissen im Extruder niederschlägt.

Außerdem ist die Verträglichkeit an den Grenzflächen zwischen der hydrophilen TPS und dem hydrophoben Polymer limitiert. Dies führt zu einer Beeinträchtigung der mechanischen Werkstoffeigenschaften (Zugfestigkeit, Dehnbarkeit), sowie zu optischen Einbußen (sinkende Transparenz und damit steigende Opazität) im Endprodukt. Für letzteres Problem gibt es bisher in der Literatur noch keinen praktikablen Lösungsansatz.

Die CN 107 955 212 betrifft einen biologisch vollständig abbaubaren Kunststofffilm enthaltend eine thermoplastische Stärke, ein bioabbaubares Polymer wie Polymilchsäure (im Dokument Poly(lactic acid) ) sowie weitere Inhaltsstoffe. Die zur Herstellung von Blasfolien verwendete Zusammensetzung enthält 20-80 Gewichtsprozent einer solchen Poly(lactic acid), vorzugsweise beträgt das Gewichtsverhältnis von thermoplastischer Stärke zu Poly(lactic acid) etwa 20 zu 80 bis 80 zu 20. Eine mögliche Transparenz der hergestellten Blasfolie wird nicht erwähnt.

Ähnliches trifft für die CN 103 159 984 zu, auch dort wird die Verwendung von Poly(lactic acid) zusammen mit thermoplastischer Stärke geoffenbart, wobei die Poly(lactic acid) hier in einer Menge von 8-51 Gewichtsprozent vorliegt. Auch die CN 103 159 984 offenbart keine mögliche Transparenz des hergestellten Produkts, auch wird keine Folie bzw. Blasfolie erwähnt.

Die derzeitig am Markt erhältlichen TPS-Qualitäten lassen wegen mangelnder Kompatibilität zumeist einen Einsatz in einem Anteil von über 30-40 Gew. % im Compound bzw. in der Folie nicht zu, ohne dass die mechanischen Eigenschaften der Endprodukte (Folien) stark darunter leiden. Gewünscht wäre aber die Herstellung von Folien mit einem höheren Anteil (>40 Gew. %) an nachwachsenden Rohstoffen wie z.B. TPS. Die, mit steigendem Stärkegehalt, einhergehende Opazität ist zusätzlich limitierend. Vor allem in der Verpackungsindustrie ist der Umstieg auf biobasierte und biologisch abbaubare Werkstoffe aus Gründen der Nachhaltigkeit und zur Reduktion des Aufkommens an langlebigen Kunststoffabfällen zwingend erforderlich. Dieser Sektor stellt aber auch konkrete Anforderungen in Hinblick auf die Transparenz (bzw. an die Opazität) von Folienwerkstoffen, da die Durchsichtigkeit von Verpackungen in einer Vielzahl an Anwendungen ein zwingendes Kriterium zur Erfüllung von Kundenerwartungen darstellt (z.B. transparente Kunststoffumverpackungen, Obst- und Gemüsesackerl).

In unterschiedlichen Publikationen wird das Problem der Opazität beim Zusatz von TPS in Biopolymercompounds behandelt. Dabei werden unterschiedliche Faktoren, wie z.B. Amylose/Amylopektin Verhältnis, Art des Weichmachers und Weichmachergehalt, sowie der Einfluss von Füllstoffen auf die Transparenz thematisiert.

Die Aufgabe der vorliegenden Erfindung ist es, die oben genannten Nachteile des Standes der Technik zu überwinden und ein Verfahren zur Herstellung eines Compounds bzw. einer Folie enthaltend thermoplastische Stärke sowie ein thermoplastisches Polymer zur Verfügung zu stellen, welches Compound zur Herstellung von transparenten Folien mittels Blas- bzw. Flachfolienextrusion zum Einsatz kommen kann.

Als Folie oder Film wird ein flächiges, dünnes Material mit einer Dicke im Bereich von 2-500 $\mu$m bezeichnet, wobei die zu erzielende Folienflexibilität im Wesentlichen von der Art des eingesetzten Rohstoffes sowie von der Foliendicke abhängt.

Die Aufgabe wird erfindungsgemäß gelöst durch ein Verfahren zur Herstellung eines Compounds bzw. einer Folie enthaltend thermoplastische Stärke, eine Alpha-Hydroxycarbonsäure ROHCOOH, wobei R $CH_2$ oder $CH_3CH$ bedeutet, in einer Menge von 0,1 bis 5, vorzugsweise 0,1 bis 3, besonders bevorzugt 0,1 bis 1 Gew. % bezogen auf die thermoplastische Stärke sowie ein thermoplastisches Polymer, bei welchen Verfahren das Compound bzw. die Folie nach seiner/ihrer Extrusion einem zusätzlichen Erwärmungsschritt auf 100-140 °C ausgesetzt wird. Überraschenderweise hat sich gezeigt, dass durch den erfindungsgemäßen zusätzlichen Erwärmungsschritt auf 100-140 °C eines Compounds enthaltend thermoplastische Stärke sowie ein thermoplastisches Polymer in einem nachfolgenden Verarbeitungsschritt eine transparente Folie erhalten werden kann. Der erfindungsgemäß zwingend vorgesehene Erwärmungsschritt kann aber auch erst nach der Weiterverarbeitung des Compounds, direkt an der Folie, durchgeführt werden. Bezüglich des erfindungsgemäß vorgesehenen Zusatzes einer Alpha-Hydroxycarbonsäure ROHCOOH hat sich gezeigt, dass eine Überschreitung der Obergrenze von 5 Gew. % (bezogen auf die thermoplastische Stärke) zu einer Verringerung der Lebensdauer des hergestellten Compounds/Folie aufgrund von Zersetzung und allgemein einer Verschlechterung der physikalischen Eigenschaften führt.

Ebenfalls bevorzugt wird, wenn der zusätzliche Erwärmungsschritt nach der Extrusion für das Compound mindestens 15 Minuten, bevorzugt mindestens 30 Minuten, besonders bevorzugt mindestens 60 Minuten und für die Folie mindestens 2 Minuten, bevorzugt mindestens 5 Minuten, besonders bevorzugt mindestens 60 Minuten dauert. Überraschenderweise hat sich gezeigt, dass durch den Zusatz einer Alpha-Hydroxycarbonsäure, vorzugsweise von Milchsäure, Compounds hergestellt werden können, welche bei einer Verarbeitung nach dem Stande der Technik, gegebenenfalls (insbesondere wenn der zusätzliche Erwärmungsschritt nicht schon während der Herstellung des Compounds erfolgt ist) mit einem anschließenden Erwärmungsschritt auf 100-140 °C, bevorzugt auf 120-140 °C, während mindestens 15 Minuten, bevorzugt mindestens 30 Minuten, besonders bevorzugt mindestens 60 Minuten (für das Compound), eine transparente Folie ergeben. Der erfindungsgemäß zwingend vorgesehene zusätzliche Erwärmungsschritt kann, wie gesagt, auch erst nach der Weiterverarbeitung des Compounds direkt an der Folie durchgeführt werden. Die Erwärmung der beschriebenen Folien auf 100-140 °C, bevorzugt auf 120-140 °C, während einer Dauer von mindestens 2 Minuten, bevorzugt mindestens 5 Minuten, besonders bevorzugt mindestens 60 Minuten, ergibt dann überraschenderweise ebenfalls eine transparente Folie. Wenn im Zusammenhang mit der vorliegenden Erfindung der Begriff "transparent" verwendet wird, so bezieht sich dieser jeweils auf einen Vergleich mit dem unbehandelten Folienmaterial (bzw. auf ein aus unbehandelten Compounds hergestelltes Folienmaterial), wobei "transparent" als Steigerung der Transparenz im Vergleich zum Referenzmaterial verstanden wird. Die Messung bzw. Berechnung der Transparenz bzw. der Opazität (Trübheit) wurde in verschiedensten Publikationen behandelt. Als Steigerung der Transparenz bzw. als Reduktion der Opazität gilt eine mittels Spektroskopie erkennbare Reduktion in der Absorption (gemessen z.B. bei einer Wellenlänge von 550 nm) im Vergleich zum jeweiligen Referenzmaterial.

Vorzugsweise enthält das erfindungsgemäße Compound als thermoplastisches Polymer ein Polymer ausgewählt aus der Gruppe umfassend Polyolefine, Polyamide, Polyurethane, Polyester und Mischungen hiervon. Bevorzugt enthält das Compound als thermoplastisches Polymer Polyester, welche aufgrund ihrer Viskositäten gut mit der TPS mischbar sind. Die eingesetzten Polymere können biologisch abbaubar oder nicht biologisch abbaubar sein, wobei ersteres bevorzugt eingesetzt wird. Die Einstellung der Compoundeigenschaften, wie z.B. der Festigkeit, ist über die Polymermischung möglich. Bei Verwendung einer erfindungsgemäß hergestellten thermoplastischen Stärke ist es sogar möglich, einen TPS Gehalt im Compound im Bereich bis zu 65 Gew. % vorzusehen.

Gemäß der vorliegenden Erfindung kann die Herstellung des beschriebenen Compounds in a) separaten Teilschritten (1. Stärkeplastifizierung und 2. anschließende, in einem separaten Apparat durchgeführte Compoundierung mit einem thermoplastischen Polymer) erfolgen, die Compoundherstellung kann aber auch b) im Zuge eines einstufigen Prozesses (Stärkeplastifizierung und Compoundierung in einem einzigen Schritt in einem Apparat) erfolgen. Transparente Folien können erfindungsgemäß sowohl auf Basis des in a) aber auch des in b) hergestellten Compounds erhalten werden.

Während erfindungsgemäß jegliche thermoplastische Stärke verwendet werden kann, wird besonders bevorzugt eine thermoplastische Stärke hergestellt nach einem besonderen Verfahren verwendet, bei welchem Verfahren eine Mischung von Stärke mit einem Polyol, vorzugsweise ausgewählt aus der Gruppe umfassend Polyethylenglykol, Mono- und Disacchariden, Zuckeralkoholen wie Glycerin, Sorbitol, Erythritol, Xylitol oder Mannitol und Mischungen hiervon, in einer Menge von 10 bis 25 Gew. % der Mischung und einem Epoxid, ausgewählt aus der Gruppe umfassend epoxidierte Pflanzenöle wie Sojabohnenöl, Leinöl, Sonnenblumenöl, Rapsöl und Mischungen hiervon, in einer Menge von 0,1 bis 6, bevorzugt 1 bis 4,5, besonders bevorzugt 2,5 bis 3,5 Gew. % der Mischung extrudiert wird. Bei der Rezeptur zur Herstellung thermoplastischer Stärke (TPS) handelt es sich, sowohl aus verarbeitungs- als auch aus werkstofftechnischer Sicht, um die Herstellung einer thermoplastischen Stärke mit einem optimierten Eigenschaftsprofil. Als Ausgangsstoffe werden Stärke, ein Weichmacher (10-25 Gew. %) sowie ein epoxidiertes Pflanzenöl (0,1-6 Gew. %) eingesetzt. Das Endprodukt ist kaltwasserquellend bis kaltwasserlöslich. Für die Herstellung von dünnwandigen Folienmaterialien (im Bereich von z.B. 10-50 μm Dicke) gilt es, die TPS in der Compoundmatrix möglichst fein zu verteilen. Überraschenderweise hat sich gezeigt, dass mit einer derart hergestellten thermoplastischen Stärke eine TPS-Partikelgröße von < 5 μm in der Polymermatrix erreicht werden kann, um die Entstehung einer Mikrorauheit (Folienoberfläche) und das Auftreten von damit einhergehenden mechanischen Schwachstellen zu vermeiden. Der Einsatz dieser TPS in der Form einer fein verteilten dispersen Compound-Phase in Kombination mit z.B. abbaubaren, thermoplastischen Polyestern (die kontinuierliche Phase) bietet eine einfache Möglichkeit zur Erhöhung der Feuchtebeständigkeit sowie zur Optimierung der Endprodukteigenschaften. So kann auch die biologische Abbaubarkeit des Endproduktes eingestellt werden. Der nachhaltige Charakter des Endproduktes kann durch den dadurch ermöglichten erhöhten Anteil an TPS gesteigert werden. Für das Epoxid hat sich gezeigt, dass die Aufnahmekapazität der Schmelze bei 6 Gew. % ausgeschöpft ist, eine höhere Zudosierung führt zu öligen Ablagerungen am Produkt bzw. am Equipment.

Wichtig ist jedenfalls, entweder während oder nach Herstellung des Compounds oder, wenn bei/nach der Herstellung des Compounds kein Erwärmungsschritt verwendet wird, nach Herstellung der Blasfolie aus dem Compound, einen zusätzlichen Erwärmungsschritt auf 100-140 °C, bevorzugt auf 120-140 °C, während mindestens 15 Minuten, bevorzugt mindestens 30 Minuten, besonders bevorzugt mindestens 60 Minuten (Compound), bzw. auf 100-140 °C, bevorzugt auf 120-140 °C, während mindestens 2 Minuten, bevorzugt mindestens 5 Minuten, besonders bevorzugt mindestens 60 Minuten (Folie), vorzusehen. Erst durch den zusätzlichen Erwärmungsschritt ist es möglich derart zu modifizieren, dass bei Herstellung einer Blasfolie aus dem Compound überraschenderweise eine transparente Folie erhalten wird. Wie in Tabelle 3 demonstriert, ist es dadurch und durch eine entsprechende Additivierung (vorzugsweise Milchsäure) möglich, eine Transparenz bzw. Opazität zu erreichen, die sich dem stärkefreien Reinpolymer (beispielsweise PBAT) annähern.

Stärke:

Die für die Herstellung von thermoplastischer Stärke zum Einsatz kommende Stärke kann jede herkömmliche Knollen-, Getreide- oder Leguminose-Stärke sein, z.B. Erbsenstärke, Maisstärke, inkl. Wachsmaisstärke, Kartoffelstärke inkl. Wachskartoffelstärke, Amaranthstärke, Reisstärke, inkl. Wachsreisstärke, Weizenstärke, inkl. Wachsweizenstärke, Gerstenstärke, inkl. Wachsgerstenstärke, Tapiokastärke, inkl. Wachstapiokastärke, Sagostärke. Stärken natürlichen Ursprungs haben in der Regel einen Amylosegehalt von 20 bis 30 Gew. %, abhängig von der Pflanzenart, aus der sie gewonnen werden. Erfindungsgemäß gehören dazu auch amylopektinreiche Stärken, welche einen deutlich erhöhten Amylopektingehalt aufweisen, bzw. auch Produkte, welche einen erhöhten Amylosegehalt enthalten. Neben den natürlichen bzw. den durch Züchtungsmaßnahmen erhaltenen amylopektinreichen Stärketypen und Hochamylosetypen, können auch über chemische und/oder physikalische Fraktionierung gewonnene bzw. über gentechnisch veränderte Pflanzen hergestellte amylopektinreiche bzw. hochamylose Stärken verwendet werden. Weiters zum Einsatz kommen können funktionalisierte Stärken, definiert wie folgt:

Funktionalisierte Stärke:

Die für die Herstellung von thermoplastischer Stärke zum Einsatz kommende Stärke kann auch eine funktionalisierte Stärke sein, wenn in der vorliegenden Beschreibung und in den Ansprüchen der Begriff "Stärke" verwendet wird, wird darunter auch eine funktionalisierte Stärke verstanden. In den Bereich Funktionalisierung fallen z.B. Veretherungen oder Veresterungen. Im Folgenden werden einige Derivatisierungen beschrieben, die alleine oder in Kombination miteinander zur weiteren Derivatisierung der Stärkederivate vorgesehen werden können. Die Art der Derivatisierung und die Rohstoffbasis der verwendeten Stärke hängen sehr eng mit dem speziellen Einsatzbereich des jeweiligen Produktes zusammen. Die Methoden hierzu sind an sich bekannt. Im Speziellen soll der Fokus hier auf der Funktionalisierung im Slurry, im Kleister, (Semi)Trockenverfahren sowie der Funktionalisierung mittels Reaktivextrusion liegen.

Im Allgemeinen unterscheidet man bei Stärkederivaten zwischen Stärkeether und Stärkeester. Weiters kann zwischen nichtionischen, anionischen, kationischen und amphoteren als auch hydrophoben Stärkederivaten differenziert werden, welche sowohl über eine Slurry-, Kleister-, Halbtrocken- oder Trockenderivatisierung als auch über eine Derivatisierung in organischen Lösungsmitteln hergestellt werden können.

Unter anionischer und nichtionischer Funktionalisierung der Stärke werden jene Derivate zusammengefasst, bei denen die freien Hydroxylgruppen der Stärke durch anionische oder nichtionische Gruppierungen substituiert werden. Auch durch oxidative Prozesse wie bspw. die Behandlung der Stärke mit Wasserstoffperoxid oder Hypolauge oder durch ein Laccase/Mediator-System kann Stärke anionisch funktionalisiert werden.

Die anionische und nichtionische Derivatisierung lässt sich prinzipiell auf zwei Arten durchführen:

a) Durch die Funktionalisierung wird eine Veresterung der Stärke erzielt. Als Funktionalisierungsmittel dienen anorganische oder organische verschiedenwertige, meist zweiwertige, Säuren bzw. Salze davon bzw. Ester davon bzw. Anhydride davon. Auch gemischte Ester oder Anhydride können verwendet werden. Bei der Veresterung der Stärke kann diese auch mehrfach erfolgen, so dass beispielsweise Distärkephosphorsäureester hergestellt werden können. Vorzugsweise ist die erfindungsgemäß eingesetzte Stärke dabei das Resultat einer Veresterung mit Mono-, Di- oder Tricarbonsäuren mit einer Alkylkette mit 1 bis 30 Kohlenstoffatomen oder ein Carbamat, besonders bevorzugt acyliert, wie succinyliert, octenylsuccinyliert, dodecylsuccinyliert oder acetyliert.

b) Im Zuge der Funktionalisierung kommt es zu einer Veretherung der Stärke. Zum Einsatz kommen können Methyl-, Ethyl-, Hydroxyethyl-, Hydroxypropyl-, Hydroxybutyl-, Carboxymethyl-, Cyanoethyl-, Carbamoylethyl-etherstärke, oder Gemische davon.

Unter kationischer Funktionalisierung der Stärken werden jene Derivate zusammengefasst, in der durch Substitution eine positive Ladung in die Stärke eingebracht wird. Die Kationisierungsverfahren erfolgen mit Amino-, Imino-, Ammonium-, Sulfonium- oder Phosphoniumgruppen. Solche kationischen Derivate enthalten bevorzugt stickstoffhaltige Gruppen, insbesondere primäre, sekundäre, tertiäre und quartäre Amine bzw. Sulfonium- und Phosphoniumgruppen, die über Ether- oder Esterbindungen gebunden sind.

Eine weitere Gruppe stellen die amphoteren Stärken dar. Diese enthalten sowohl anionische als auch kationische Gruppen, wodurch ihre Anwendungsmöglichkeiten sehr spezifisch sind. Meist handelt es sich um kationische Stärken, die entweder durch Phosphatgruppen oder durch Xanthate zusätzlich funktionalisiert werden.

Bei den Estern unterscheidet man zwischen einfachen Stärkeestern und gemischten Stärkeestern, wobei der (die) Substituent(en) des Esters verschiedenartig sein kann (können): Im Esterrest RCOO- kann der Rest R ein Alkyl-, Aryl-, Alkenyl-, Alkaryl- oder Aralkylrest mit 1 bis 20 Kohlenstoffatomen, vorzugsweise 1 bis 17 Kohlenstoffatomen, bevorzugt mit 1 bis 6 Kohlenstoffatomen, sein. Diese Produkte schließen die Derivate Acetat (hergestellt aus Vinylacetat oder Acetanhydrid), Propionat, Butyrat, Stearat, Phthalat, Succinat, Oleat, Maleinat, Fumarat und Benzoat ein.

Veretherungen erfolgen großteils durch Umsetzung mit Alkylenoxiden (Hydroxyalkylierung), die 1 bis 20 Kohlenstoffatome, vorzugsweise 2 bis 6 Kohlenstoffatome, insbesondere 2 bis 4 Kohlenstoffatome, enthalten, insbesondere durch Verwendung von Ethylen- und Propylenoxid. Es können aber auch Methyl-, Carboxymethyl-, Cyanethyl- und Carbamoylether hergestellt und verwendet werden. Als Beispiel für eine Carboxyalkylierung sei die Reaktion von Stärke mit Monochloressigsäure oder deren Salzen angeführt. Weiters seien speziell noch hydrophobierende Veretherungsreagenzien, wie Glycidylether oder Epoxide, genannt. Die Alkylkettenlänge der genannten Reagenzien liegt zwischen 1-20 Kohlenstoffatomen, darüber hinaus sind auch noch aromatische Glycidylether möglich.

Als Beispiel für eine Derivatisierung mit Glycidylethern seien o-Kresol-glycidether, Polypropylendi-glykolglycidether, tert-Butylphenylglycidether, Ethylhexyl-glycidether, Hexandiolglycidether und Neodekansäure-glycidester genannt.

Eine weitere Möglichkeit der Alkylierung besteht in der Alkylierung über Alkylhalogenide, beispielsweise über Methylchlorid, Dialkylcarbonate, z.B. Dimethylcarbonat (DMC) oder Dialkylsulfat z.B. Dimethylsulfat.

Die für die Veresterungen, Veretherungen und Vernetzungen verwendeten und auch die chemisch nicht-funktionalisierten Stärken können zudem über thermisch-physikalische Modifikationen getempert (im Slurry) oder inhibiert (Trocken- bzw. Halbtrockenreaktion) sein. Stärken können auch über Hydrophobierungsreagenzien funktionalisiert werden. Veretherte hydrophobe Stärken erhält man dabei, wenn die hydrophoben Reagenzien als funktionelle Gruppe ein Halogenid, ein Epoxid, ein Glycidyl, ein Halogenhydrin, eine Carbonsäure oder eine quaternäre Ammoniumgruppe enthalten. Für veresterte hydrophobe Stärken enthält das hydrophobe Reagens zumeist ein Anhydrid. Eine Hydrophobierung der Stärke kann auch über eine Abmischung einer Stärke oder eines Stärkederivates mit Fettsäureester erfolgen.

All die genannten Funktionalisierungen der Stärke können nicht nur durch Umsetzung nativer Stärke erzielt werden, auch abgebaute Formen können zum Einsatz kommen. Die Abbauvorgänge können hydrolytisch (säurekatalysiert), oxidativ, auf mechanische, thermische, thermochemische oder enzymatische Weise erfolgen. Dadurch lässt sich die Stärke nicht nur strukturell verändern, die Stärkeprodukte können auch kaltwasserlöslich bzw. kaltwasserquellbar gemacht werden.

Schließlich kann die Stärke auch als Pfropf-Polymer oder als Pfropf-Copolymer vorliegen, wie beispielsweise mit Produkten aus der Gruppe der Polyvinylalkohole oder Polyester.

Epoxidierte Pflanzenöle:

Aus chemischer Sicht handelt es sich bei den gemäß einer bevorzugten Ausführungsform der vorliegenden Erfindung für die Herstellung der TPS zum Einsatz kommenden Epoxiden um zyklische Ether. Epoxide können mit den Hydroxygruppen der Stärke Interaktionen ausbilden. Zur Stoffgruppe der Epoxide zählen unter anderem auch die erfindungsgemäß zum Einsatz kommenden epoxidierten Öle, insbesondere Pflanzenöle. Aufgrund ihrer chemischen Struktur sind Epoxide instabil, d.h. die Ringstruktur wird geöffnet und kann mit der Stärke reagieren bzw. in Kombination mit z.B. Wasser zu einem Diol reagieren. Die Öffnung des Epoxidrings kann durch Säuren (z.B. Carbonsäuren) katalysiert werden. Vorzugsweise kommen epoxidierte Pflanzenöle wie Sojabohnen- oder Leinöl (ESBO, ELO) zum Einsatz. Epoxidiertes Leinöl weist dabei bei 25 °C eine Viskosität von etwa 900 mPas sowie einen Epoxidsauerstoffgehalt von min. 8,5 Gew. % auf. Epoxidiertes Sojabohnenöl hingegen weist eine Viskosität von etwa 300-450 mPas (ebenfalls bei 25 °C) sowie einen Epoxidsauerstoffgehalt von 6,5-7,5 Gew. % auf. Die für den Zweck der vorliegenden Erfindung durchgeführten Viskositätsmessungen erfolgten jeweils in einem Viskosimeter gemäß EN ISO 3219.

Polyole:

Gemäß einer bevorzugten Ausführungsform der vorliegenden Erfindung enthält die für die Herstellung der TPS im Compounds verwendete Mischung ein Polyol ausgewählt aus der Gruppe bestehend aus Sorbitol, Erythritol, Xylitol, Mannitol und Mischungen hiervon, in einer Menge von 10 bis 25 Gew. %. Diese Polyole sind in der TPS als Weichmacher so effizient (Interaktion mit Hydroxygruppen), dass die Verarbeitung im Prozessfenster (niedriger Druck, niedriges Drehmoment) erfolgen kann. Auch können die Polyole der TPS als Sirup (Lösung in Wasser) zugesetzt werden, was eine bessere Einmischbarkeit in die Schmelze bedingt, dies führt zu homogenerer TPS bzw. auch zu homogeneren Compounds und zu glatten Folien. Weiters haben diese Polyole gegenüber Glycerin den Vorteil, dass sie bei Raumtemperatur fest sind, bei der Verarbeitung hingegen als Schmelze vorliegen und damit plastifizierend wirken können.

Vorzugsweise enthält die Mischung für die Herstellung der TPS im Compound als Polyol Sorbitol oder Erythritol in einer Menge von 10 bis 15 Gew. % der Mischung.

Auch ist günstig, wenn die Mischung für die Herstellung der TPS im Compound das Polyol in einer Menge von 13 bis 15 Gew. % der Mischung enthält. Es hat sich gezeigt, dass der Anteil von Polyol als Weichmacher in der TPS nicht zu hoch sein soll, da es sonst zu potentiellen Problemen im Lebensmittelkontakt kommen kann. Der Weichmacher könnte beispielsweise austreten, wenn er im Überschuss vorliegt, andererseits muss aber auch ein gewisser Prozentsatz an Weichmacher vorliegen um a) im Prozessfenster verarbeiten zu können (Druck, Drehmoment) und b) letztendlich die geforderten Folieneigenschaften zu erreichen (Dehnbarkeit, Zugfestigkeit).

Gemäß einer weiteren bevorzugten Ausführungsform der vorliegenden Erfindung ist vorgesehen, dass die Mischung für die Herstellung der TPS im Compound Epoxid zu Polyol in einem Verhältnis von 1 zu 2 bis 1 zu 8, vorzugsweise 1 zu 4 bis 1 zu 6, besonders bevorzugt 1 zu 5, enthält. Im Bereich 1 zu 2 bis 1 zu 8 ist die TPS Verarbeitung gut (Druck, Drehmoment sowie Schneidbarkeit der Schmelze zur Herstellung von Granulaten) und es ist eine Steigerung in der Schüttdichte erkennbar. Ein Verhältnis von 1 zu 5 erfüllt letztendlich an der Folie alle geforderten Eigenschaften, nämlich eine Zugfestigkeit > 10 MPa und eine Dehnbarkeit > 300 %.

Besonders bevorzugt ist, wenn die Mischung für die Herstellung der TPS im Compound weiters eine Säure, vorzugsweise eine Carbonsäure ausgewählt aus der Gruppe bestehend aus Zitronensäure, Äpfelsäure, Essigsäure oder Weinsäure, in einer Menge von 0,1 bis 1, vorzugsweise 0,1 bis 0,5 Gew. % der Mischung enthält. Eine solche Säure wirkt sowohl als Aktivierungsmittel für das Epoxid als auch als Verarbeitungshilfsmittel, da sie a) die Verzweigungsketten an Amylopektin kappt und somit den Anteil an linearen Molekülen steigert. Das Verhalten des Polymers wird somit dem Verhalten klassisch thermoplastischer Werkstoffe ähnlicher. b) Weiters geht im Zuge des Säurezusatzes eine Depolymerisation der Moleküle an der glykosidischen Bindung von statten. Die Auswirkung der Änderung von Prozessbedingungen wie Temperatur, Druck und Verweilzeit kann so besser abgeschätzt werden. Bewährt haben sich zu diesem Zweck zum Beispiel Carbonsäuren wie Zitronensäure, Äpfelsäure, Essigsäure oder Weinsäure.

Im erfindungsgemäßen Verfahren ist vorzugsweise vorgesehen, dass die Mischung für die Herstellung der TPS im Compound bei einer Temperatur von 100-175 °C extrudiert wird, vorzugsweise in einem Doppelschneckenextruder und bei verringertem Druck im letzten Abschnitt des Extruders. Im angegebenen Temperaturbereich ist der Rohstoff bei kontinuierlicher Verarbeitung thermisch stabil, der Doppelschneckenextruder ermöglicht die effiziente Destrukturierung der Stärke (Aufbrechen der Kristallinität der nativen Stärke) durch Zwangsförderung. Ein verringerter Druck im letzten Abschnitt des Extruders ist zur Einstellung des Wassergehaltes am TPS-Produkt wichtig, dieser wirkt sich auf die Weiterverarbeitbarkeit aus und sollte möglichst zwischen 4-6 Gew. % liegen.

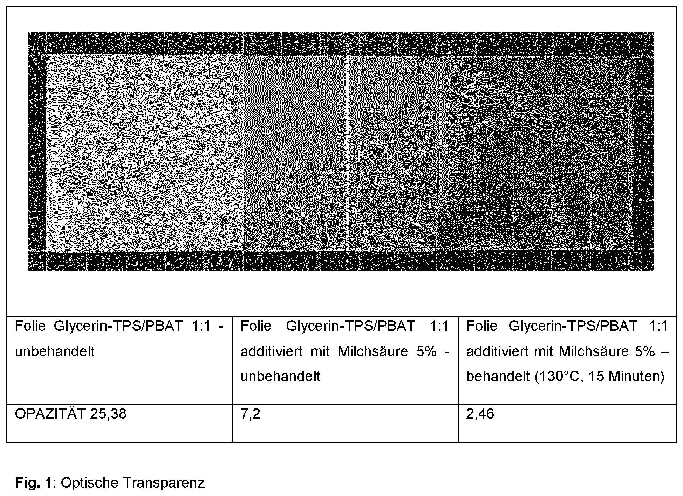

Eine thermoplastische Stärke, erhältlich nach einem der oben geoffenbarten Verfahren, weist vorzugsweise eine Schüttdichte von 70 bis 85 g/100 ml auf. Damit ist die derart hergestellte thermoplastische Stärke wesentlich dichter als eine ohne die Verwendung eines Epoxids hergestellte TPS, dafür wird auch auf die beiliegende Abbildung 1 verwiesen, aus welchen diese Unterschiede deutlich sichtbar sind. Ermittelte Schüttdichten von hergestellten thermoplastischen Stärken sind auch aus der beiliegenden Abbildung 2 ersichtlich. Erfindungsgemäß vorgesehen ist auch ein Compound enthaltend entweder eine herkömmliche thermoplastische Stärke oder eine wie oben beschrieben hergestellte thermoplastische Stärke, extrudiert mit mindestens einem thermoplastischen Polymer und einer Alpha-Hydroxycarbonsäure ROHCOOH, wobei R $CH_2$ oder $CH_3CH$ bedeutet, in einer Menge von 0,15 bis 5, vorzugsweise 0,1 bis 3, besonders bevorzugt 0,1 bis 1 Gew. % bezogen auf die thermoplastische Stärke. Wenn diese Compounds während oder nach ihrer Herstellung einen Erwärmungsschritt auf 100-140 °C, bevorzugt auf 120-140 °C, während mindestens 15 Minuten, bevorzugt mindestens 30 Minuten, besonders bevorzugt mindestens 60 Minuten ausgesetzt werden, können sie direkt zur Weiterverarbeitung z.B. an der Folienanlage eingesetzt werden und transparente Folien sind das Ergebnis. Alternativ kann ein solches Compound enthaltend entweder eine herkömmliche thermoplastische Stärke oder eine wie oben beschrieben hergestellte thermoplastische Stärke, extrudiert mit mindestens einem thermoplastischen Polymer und einer Alpha-Hydroxycarbonsäure ROHCOOH, wobei R $CH_2$ oder $CH_3CH$ bedeutet, in einer Menge von 0,1 bis 5, vorzugsweise 0,1 bis 3, besonders bevorzugt 0,1 bis 1 Gew. % bezogen auf die thermoplastische Stärke, auch ohne Erwärmungsschritt auf einer Folienanlage eingesetzt werden, in einem solchen Fall muss dann aber die aus solchen Compounds hergestellte Blasfolie dem genannten Erwärmungsschritt auf 100-140 °C, bevorzugt auf 120-140 °C, während mindestens 2 Minuten, bevorzugt mindestens 5 Minuten, besonders bevorzugt mindestens 60 Minuten ausgesetzt werden. Erst durch den Erwärmungsschritt wird dann eine transparente Folie erhalten.

Wie bereits ausgeführt ist eine wie oben beschrieben hergestellte TPS im Compound besonders günstig zur Herstellung einer transparenten Folie durch Blas- bzw. Flachfolienextrusion. Überraschenderweise hat sich gezeigt, dass bei der Herstellung einer solchen Folie, das bei Verwendung einer aus dem Stand der Technik bekannten TPS praktisch unvermeidliche Rauchen nicht mehr auftritt.

Die oben genannten Mischungen mit ihren einzelnen Komponenten werden unter Temperatur und Schereinwirkung im Extruder zu einer thermoplastischen Schmelze verarbeitet.

BEISPIELE:

Die vorliegende Erfindung wird nun anhand der nachfolgenden Beispiele und Figuren näher erläutert. Wenn nichts anderes angegeben, sind Prozentzahlen und Verhältnisse immer bezogen auf die Masse.
Figur 1 zeigt die Verbesserung der Transparenz anhand einer Folie aus Glycerin-TPS/PBAT 1:1 jeweils - von links nach rechts - unbehandelt, unbehandelt aber unter Zusatz von Milchsäure sowie unter Zusatz von Milchsäure und nach dem erfindungsgemäß vorgesehenen Erwärmungsschritt.
Bei den nachfolgenden Versuchen wurde als Ausgangsrohstoff Maisstärke mittels Feststoffdosierung in einen Extruder eingebracht. Zur Verbesserung der Verarbeitbarkeit (Reduktion Drehmoment) wird Stearinsäure eingesetzt (1 Gew. %). Die Mischung wird unter Verwendung eines Temperaturprofils im Bereich 100-130 °C und bei einer Drehzahl von 250 upm in einem Doppelschneckenextruder verarbeitet und an der Düsenplatte mittels Heißabschlag granuliert. Der entstandene Werkstoff ist wasserlöslich und kann als fein verteilte TPS (disperse Phase) über einen separaten Extrusionsschritt in z.B. Polyesterschmelzen (kontinuierliche Phase) eingearbeitet werden. Die thermoplastische Stärke wird zusammen mit Polybutylenadipat-terephthalat (PBAT) als Polyester im Verhältnis 1:1 in einem Doppelschneckenextruder compoundiert.

Lieferanten:

   Sorbitol, Glycerin, Stearinsäure - Brenntag, AT
   DL-Milchsäure - Sigma Aldrich
   PBAT - BASF
   ESBO - Hobum, AT
   Zitronensäure - Jungbunzlauer, AT

Maschinentypen:

   Extrusion (TPS und Compound): Theysson TSK 30, 28D, 7 Zonen
   Blasfolienanlage: OCS BFT400V3

Als Schwellenwert für die erfindungsgemäß vorgesehene Erhöhung der Transparenz wird die Opazität des reinen Trägerpolymers wie z.B. des reinen Polyesters (als kontinuierliche Compoundphase) herangezogen. Um dies zu erklären, wird in der nachfolgenden Tab. 1 der Opazitätsvergleich anhand einer Folie bestehend aus reinem Polybutylenadipat-terephthalat (PBAT, Ecoflex) mit einer Folie aus einem Gemisch aus PBAT und Glycerin-plastifizierter TPS (Mischung 1:1) sowie mit einer Folie aus einem Gemisch aus PBAT und Milchsäureadditivierter Glycerin-plastifizierter TPS (Mischung 1:1), gezeigt:

Tabelle 1: Vergleich der Opazität an Folienmaterialien ohne thermische Behandlung

| Vergleich | Folie PBAT (Dicke 65 $\mu$m) Referenz | Folie PBAT/Glycerin-TPS 1:1 (40 $\mu$m) | Folie PBAT/Glycerin-TPS1:1, TPS 5% mit Milchsäure (50 $\mu$m) |
|---|---|---|---|
| Absorption (Wellenlänge 550 nm) | 0,30 | 1,02 | 0,36 |
| Umrechnung mit Bezug zur Foliendicke*) OPAZITÄT | 4,60 | 25,38 | 7,20 |
| *) der Zusammenhang zwischen Absorption und Schichtdicke über den Extinktionskoeffizienten nach Lambert-Peer wurde in folgendem Versuch überprüft: <br><br> $A = \log_{10} \frac{I0}{I} = \varepsilon \cdot l \cdot c$ (wobei, $\varepsilon$ = Extinktionskoeffizient, l = Schichtdicke, c = Konzentration $\rightarrow$ der Opazität-verursachende Faktor ist in diesem Fall die Stärke - da der Stärkeanteil in den Versuchen konstant gehalten wurde, wird der Faktor c vernachlässigt bzw. nicht separat berücksichtigt). | | | |

Tabelle 2: Einfluss der Foliendicke auf ε·c

| Probendicke Folie PBAT/Glycerin-TPS 1:1 mit Milchsäure (mm) = l | Absorption = A | Vergleich ε·c |
|---|---|---|
| 0,050 | 0,360 | 7,2 |
| 0,100 | 0,720 | 7,2 |
| 0,150 | 1,080 | 7,2 |
| 0,200 | 1,420 | 7,1 |

Die nachfolgende Tab. 3 zeigt die jeweiligen Ergebnisse nach der erfindungsgemäß vorgesehenen thermischen Behandlung, hier der Folien, bei 130 °C für die Dauer von 15 Minuten:

Tabelle 3: Vergleich nach thermischer Behandlung von Folien bei 130 °C für 15 Minuten

| Vergleich | Folie PBAT (Dicke 65 μm) Referenz | Folie PBAT/Glycerin-TPS 1:1 (40 μm) | Folie PBAT/Glycerin-TPS 1:1, TPS mit 5% Milchsäure (50 μm) |
|---|---|---|---|
| Absorption (Wellenlänge 550 nm) | 0,16 | 0,46 | 0,12 |
| Umrechnung mit Bezug zur Foliendicke*) OPAZITÄT | 2,42 | 11,38 | 2,46 |

Tabelle 4 zeigt die Eigenschaften von Folienmaterialien (jeweils vor und nach thermischer Behandlung) auf Basis von Compounds bestehend aus PBAT und verschiedenen thermoplastischen Stärken, wobei der Unterschied im, für die TPS-Herstellung verwendeten, Weichmacher besteht.

Tabelle 4: Werkstoffkennwerte von Folienmaterialien auf der Basis von TPS und dem Polyester Ecoflex der BASF, DE (compoundiert 1:1), wobei bei der Herstellung der TPS unterschiedliche Weichmacher in vergleichbaren Mengenanteilen (je 13 Gew. % der in der Tabelle angeführten Substanz in Kombination mit 4 Gew. % Sorbitol fest) zum Einsatz kamen - die beschriebene "Behandlung" bezieht sich auf ein Erwärmen der hergestellten Folien bei 130 °C für die Dauer von 15 Minuten

| Weichmacher | Opazität vor Behandlung | Opazität nach Behandlung |
|---|---|---|
| Glycerin | 25,38 | 11,38 |
| Xylitol | 27,08 | 10,43 |
| Sorbitol | 21,17 | 16,72 |

Tabelle 5 zeigt Folienmaterialien die 30% TPS enthalten (Glycerin-plastifiziert sowie lediglich mit Wasser plastifiziert). Es ist erkennbar, dass der Transparenzeffekt auch bei einer Plastifizierung lediglich mit Wasser auftritt (ein zusätzlicher Weichmacher ist nicht zwingend nötig um den Effekt zu erzielen).

Tabelle 5: Folien welche im Vergleich auf Basis Wasser-plastifizierter und Glycerin-plastifizierter TPS hergestellt wurden (30% TPS in der Mischung), Behandlung 130°C, 15 Minuten

| Weichmacher | Opazität vor Behandlung | Opazität nach Behandlung |
|---|---|---|
| Glycerin | 18,93 | 10,76 |
| Wasser | 8,09 | 3,30 |

Es ist erkennbar, dass die Opazität durch die thermische Behandlung reduziert werden kann, und sich, abhängig vom eingesetzten Weichmacher, der an der Referenzfolie erzielbaren Opazität bzw. Transparenz annähert (reines PBAT, Opazität unbehandelt = 4,6; Opazität behandelt = 2,42).

Bei den nachfolgenden Beispielen betreffend die Herstellung einer bevorzugt verwendeten TPS wurde native Stärke (Native Maisstärke, Maisita 21000) mit einem Weichmacher (10-25 Gew. %), Säure (0,1-1 Gew. %) sowie, natürlich nur bei den bevorzugt verwendeten Beispielen, ein epoxidiertes Pflanzenöl (0,1-6 Gew. %) in einem einstufigen Extrusionsprozess gemischt, aufgeschlossen und plastifiziert. Dazu wurde die TPS in einem Doppelschneckenextruder mit Vakuumentgasung hergestellt, sämtliche Additive werden dem Extrusionsprozess über entsprechende Dosieraggregate direkt zugegeben. Die Verarbeitung erfolgt im Temperaturbereich zwischen 100 und 160 °C (ab 160 °C ist eine starke Braunfärbung zu erkennen).

Der Weichmacher kann dabei sowohl in fester, als auch in flüssiger Form vorgelegt werden, auch ist es möglich die Zugabe zu splitten (d.h. Zusatz teilweise in fester und teilweise in flüssiger Form). Die Ölkomponente wird unbehandelt in flüssiger/pumpbarer Form zugesetzt. Die hergestellten Extrudate sind für die Weiterverarbeitung zu erfindungsgemäßen Compounds (z.B. in Kombination mit Polyestern) geeignet. Erst auf Basis der Compounds sowie des Zusatzes einer Alpha-Hydroxycarbonsäure ROHCOOH, wobei R $CH_2$ oder $CH_3CH$ bedeutet (vorzugsweise Milchsäure), in einer Menge von 0,1 bis 5, vorzugsweise 0,1 bis 3, besonders bevorzugt 0,1 bis 1 Gew. % bezogen auf die thermoplastische Stärke und dem entweder während oder nach Herstellung des Compounds oder nach Herstellung einer Blasfolie aus dem Compound einen Erwärmungsschritt auf 100-140 °C, während mindestens 15 Minuten, bevorzugt mindestens 30 Minuten, besonders bevorzugt mindestens 60 Minuten (Compound), bzw. während mindestens 2 Minuten, bevorzugt mindestens 5 Minuten, besonders bevorzugt mindestens 60 Minuten (Folie), ist es möglich, transparente Endprodukte wie z.B. transparente Folienmaterialien herzustellen.

Durch den Einsatz anderer Weichmacher als Glycerin ohne den Zusatz von epoxidiertem Pflanzenöl kommt es zu Einbußen in den mechanischen Werkstoffeigenschaften. Die ausschließliche Substitution von Glycerin durch Weichmacher wie z.B. Sorbitol, Isosorbid, oder Xylitol in einer TPS ist demnach nicht zielführend und führt im Falle von Folienmaterialien auf der Basis von TPS und Polymer erwiesenermaßen zu Einbußen in Hinblick auf die erzielbaren mechanischen Werkstoffeigenschaften. Selbstverständlich kann erfindungsgemäß aber auch eine unter Einsatz von Glycerin und ohne Zusatz von epoxidiertes Pflanzenöl hergestellte TPS zum Einsatz kommen, tatsächlich kann jegliche TPS verwendet werden solange der erfindungsgemäße Zusatz einer Alpha-Hydroxycarbonsäure ROHCOOH, wobei R $CH_2$ oder $CH_3CH$ bedeutet (vorzugsweise Milchsäure), in einer Menge von 0,1 bis 5, vorzugsweise 0,1 bis 3, besonders bevorzugt 0,1 bis 1 Gew. % bezogen auf die thermoplastische Stärke vorgesehen wird, und entweder während oder nach Herstellung des Compounds oder nach Herstellung einer Blasfolie aus dem Compound der genannte Erwärmungsschritt auf 100-140 °C, während mindestens 15 Minuten, bevorzugt mindestens 30 Minuten, besonders bevorzugt mindestens 60 Minuten (Compound), bzw. während mindestens 2 Minuten, bevorzugt mindestens 5 Minuten, besonders bevorzugt mindestens 60 Minuten (Folie), eingehalten wird.

Erst bei Zusatz einer Alpha-Hydroxycarbonsäure ROHCOOH, wobei R $CH_2$ oder $CH_3CH$ bedeutet (vorzugsweise Milchsäure), in der angegebenen Menge und Vorsehen des genannten Erwärmungsschrittes, können Blasfolien mit einer überraschenden Transparenz hergestellt werden.

Die nachstehende Tabelle zeigt den Einfluss der Alpha-Hydroxycarbonsäurekonzentration, hier der Milchsäurekonzentration, auf die Opazität der beschriebenen Folien:

Tabelle 6: Veränderungen in der Opazität mit zunehmendem Milchsäuregehalt - nach erfolgter thermischer Behandlung der Folien bei 130 °C für die Dauer von 15 Minuten

| Vergleich | Folie PBAT (Dicke 65 $\mu$m) Referenz | Folie PBAT/Glycerin-TPS 1:1 (40 $\mu$m) | Folie PBAT/Glycerin-TPS 1:1, TPS mit 1 % Milchsäure (50 $\mu$m), erf.gem. | Folie PBAT/Glycerin-TPS 1:1, TPS mit 3 % Milchsäure (50 $\mu$m), erf.gem. | Folie PBAT/Glycerin-TPS 1:1, TPS mit 5 % Milchsäure (50 $\mu$m), erf.gem. |
|---|---|---|---|---|---|
| Absorption (Wellenlänge 550 nm) | 0,157 | 0,455 | 0,232 | 0,166 | 0,123 |
| Umrechnung mit Bezug zur Foliendicke*) OPAZITÄT | 2,420 | 11,375 | 4,640 | 3,320 | 2,460 |

Gemäß der vorliegenden Erfindung hat sich überraschenderweise gezeigt, dass auch die thermische Behandlung eines eine Alpha-Hydroxycarbonsäure enthaltenden Compounds (im Vergleich zu einem unbehandelten Compound) eine Reduktion in der Opazität bzw. Steigerung der Transparenz einer aus dem Compound hergestellten Folie bedingt:

Tabelle 7: Transparenzwerte von Folien vor deren Herstellung lediglich die Compounds thermisch behandelt wurden (130 °C für die Dauer von einer Stunde)

| Vergleich | Folie PBAT/Sorbit-TPS 1:1, TPS mit 5% Milchsäure, (36 $\mu$m) - Compound unbehandelt | Folie PBAT/Sorbit-TPS 1:1, TPS mit 5% Milchsäure, (43 $\mu$m) - Compound behandelt |
|---|---|---|
| Absorption (Wellenlänge 550 nm) | 0,552 | 0,427 |
| Umrechnung mit Bezug zur Foliendicke*) OPAZITÄT | 15,333 | 9,930 |

Bei einer bevorzugten Ausführungsform der vorliegenden Erfindung führt der Zusatz von epoxidierten Pflanzenölen (z.B. epoxidiertes Leinöl (ELO), epoxidiertes Sonnenblumenöl, epoxidiertes Rapsöl oder epoxidiertes Sojabohnenöl (ESBO) sowie Mischungen hiervon) während der Herstellung der TPS, auch beim Einsatz von z.B. Sorbitol, zur Einbindung/Einmischung des Weichmachers in der TPS.

Tabelle 8: Folie auf der Basis von TPS, welche mit 3% ESBO, 0,1 % Zitronensäure und 3% Milchsäure modifiziert wurde im Compound 1:1 mit PBAT - die thermische Behandlung erfolgte bei 130 °C für die Dauer von 15 Minuten (Foliendicke 75 $\mu$m)

| | Folie unbehandelt | Folie behandelt |
|---|---|---|
| OPAZITÄT | 5,61 | 2,97 |

Die Aktivierung der Epoxidfunktionalität in den epoxidierten Pflanzenölen wird begünstigt durch den Zusatz von Säuren. Für diese Aktivierung können dabei Carbonsäuren (die im Idealfall auf nachhaltiger Basis hergestellt werden können) wie z.B. Zitronensäure, Weinsäure, Essigsäure, Itaconsäure, Äpfelsäure oder Milchsäure, zum Einsatz kommen.

Analysemethoden:

Foliendickenbestimmung mittels handelsüblichem Mikrometer

Abgesehen von der erhöhten Transparenz (bzw. verringerten Opazität) zeigen sich die überlegenen Werkstoffeigenschaften von aus erfindungsgemäß hergestellten TPS bzw. Compounds produzierten Folien auch in einer Dehnbarkeit: >300 % bei einer Zugfestigkeit von >10 MPa. Im erfindungsgemäßen Verfahren kann ein TPS Gehalt von 50 Gew. % und darüber eingesetzt werden (für die obenstehenden Versuche wurde ein TPS-Gehalt von 50 Gew. % herangezogen).

Bestimmung der Opazität:

Direktes Einbringen der Folien in den Strahlengang des Spektrometers sowie Messung im sichtbaren Bereich (Wellenlänge 300-900 nm). Auswertung des Messergebnisses anhand der bei einer Wellenlänge von 550 nm gemessenen Absorption mit Bezug zur Foliendicke.

Die verbesserte Transparenz bzw. verringerte Opazität zeigt sich in einer Reduktion des Parameters $\varepsilon \cdot c$ auf einen Wert von < 10 (siehe optischer Vergleich in den Figuren) bei einem TPS-Gehalt von 50 % in der Folie (bei einem Mindestgehalt an 35 % Reinstärke).

**Patentansprüche**

1. Verfahren zur Herstellung eines Compounds bzw. einer Folie enthaltend thermoplastische Stärke, eine Alpha-Hydroxycarbonsäure ROHCOOH, wobei R CH$_2$ oder CH$_3$CH bedeutet, vorzugsweise Milchsäure, in einer Menge von 0,1 bis 5, vorzugsweise 0,1 bis 3, besonders bevorzugt 0,1 bis 1 Gew. % bezogen auf die thermoplastische Stärke, sowie ein thermoplastisches Polymer, bei welchen Verfahren das Compound bzw. die Folie nach seiner/ihrer Extrusion einem zusätzlichen Erwärmungsschritt auf 100-140 °C ausgesetzt wird.

2. Verfahren nach Anspruch 1, **dadurch gekennzeichnet, dass** der zusätzliche Erwärmungsschritt nach der Extrusion für das Compound mindestens 15 Minuten, bevorzugt mindestens 30 Minuten, besonders bevorzugt mindestens 60 Minuten und für die Folie mindestens 2 Minuten, bevorzugt mindestens 5 Minuten, besonders bevorzugt mindestens 60 Minuten dauert.

**3.** Verfahren nach einem der Ansprüche 1 oder 2, **dadurch gekennzeichnet, dass** als thermoplastisches Polymer ein Polymer ausgewählt aus der Gruppe umfassend Polyolefine, Polyamide, Polyurethane, Polyester und Mischungen hiervon verwendet wird.

**4.** Verfahren nach einem der Ansprüche 1 bis 3, **dadurch gekennzeichnet, dass** zur Herstellung der thermoplastischen Stärke eine Mischung von Stärke mit einem Polyol, vorzugsweise ausgewählt aus der Gruppe umfassend Polyethylenglykol, Monosacchariden, Zuckeralkoholen wie Glycerin, Sorbitol, Erythritol, Xylitol oder Mannitol und Mischungen hiervon, in einer Menge von 10 bis 25 Gew. % der Mischung, und einem Epoxid, ausgewählt aus der Gruppe umfassend epoxidierte Pflanzenöle wie Sojabohnenöl, Leinöl, Sonnenblumenöl, Rapsöl und Mischungen hiervon, in einer Menge von 0,1 bis 6, bevorzugt 1 bis 4,5, besonders bevorzugt 2,5 bis 3,5 Gew. % der Mischung, extrudiert wird.

**5.** Verfahren nach Anspruch 4, **dadurch gekennzeichnet, dass** die Mischung zur Herstellung der thermoplastischen Stärke ein Polyol ausgewählt aus der Gruppe bestehend aus Sorbitol, Erythritol, Xylitol, Mannitol und Mischungen hiervon, in einer Menge von 10 bis 15 Gew. % der Mischung enthält.

**6.** Verfahren nach einem der Ansprüche 4 oder 5, **dadurch gekennzeichnet, dass** die Mischung zur Herstellung der thermoplastischen Stärke als Polyol Sorbitol oder Eryithritol in einer Menge von 10 bis 15 Gew. % der Mischung enthält.

**7.** Verfahren nach einem der Ansprüche 4 bis 6, **dadurch gekennzeichnet, dass** die Mischung zur Herstellung der thermoplastischen Stärke das Polyol in einer Menge von 13 bis 15 Gew. % der Mischung enthält.

**8.** Verfahren nach einem der Ansprüche 4 bis 7, **dadurch gekennzeichnet, dass** die Mischung zur Herstellung der thermoplastischen Stärke Epoxid zu Polyol in einem Verhältnis von 1 zu 2 bis 1 zu 8, vorzugsweise 1 zu 4 bis 1 zu 6, besonders bevorzugt 1 zu 5, enthält.

**9.** Verfahren nach einem der Ansprüche 4 bis 8, **dadurch gekennzeichnet, dass** die Mischung zur Herstellung der thermoplastischen Stärke weiters eine Säure, vorzugsweise eine Carbonsäure ausgewählt aus der Gruppe bestehend aus Zitronensäure, Äpfelsäure, Essigsäure oder Weinsäure, in einer Menge von 0,1 bis 1, vorzugsweise 0,1 bis 0,5 Gew. % der Mischung enthält.

**10.** Verfahren nach einem der Ansprüche 1 bis 9, **dadurch gekennzeichnet, dass** die Mischung zur Herstellung der thermoplastischen Stärke bei einer Temperatur von 100-175 °C extrudiert wird, vorzugsweise in einem Doppelschneckenextruder mit separater Vakuumzone in der die Entgasung durch Anlegen von Unterdruck erfolgt.

**11.** Compound hergestellt durch ein Verfahren nach einem der Ansprüche 1 bis 10 zur Verwendung bei der Herstellung einer transparenten Folie.

**12.** Transparente Folie, hergestellt durch Blas- bzw. Flachfolienextrusion eines Compounds nach Anspruch 11.

**Claims**

**1.** Method for producing a compound or a film containing thermoplastic starch, an alpha-hydroxycarboxylic acid ROHCOOH, wherein R is $CH_2$ or $CH_3CH$, preferably lactic acid, in an amount of 0.1 to 5, preferably 0.1 to 3, particularly preferably 0.1 to 1 % by weight in relation to the thermoplastic starch, and a thermoplastic polymer, in which method the compound or the film is subjected to an additional heating step to 100-140°C after its extrusion.

**2.** Method according to claim 1, **characterized in that** the additional heating step after extrusion lasts at least 15 minutes, preferably at least 30 minutes, particularly preferably at least 60 minutes for the compound, and at least 2 minutes, preferably at least 5 minutes, particularly preferably at least 60 minutes for the film.

**3.** Method according to claim 1 or 2, **characterized in that** a polymer selected from the group comprising polyolefins, polyamides, polyurethanes, polyesters and mixtures thereof is used as thermoplastic polymer.

4. Method according to any one of claims 1 to 3, **characterized in that** for producing the thermoplastic starch, a mixture of starch with a polyol, preferably selected from the group comprising polyethylene glycol, monosaccharides, sugar alcohols such as glycerine, sorbitol, erythritol, xylitol or mannitol and mixtures thereof, in an amount of 10 to 25 % by weight of the mixture, and an epoxide, selected from the group comprising epoxidized plant oils such as soybean oil, linseed oil, sunflower oil, rapeseed oil and mixtures thereof, in an amount of 0.1 to 6, preferably 1 to 4.5, particularly preferably 2.5 to 3.5 % by weight of the mixture, is extruded.

5. Method according to claim 4, **characterized in that** the mixture for producing the thermoplastic starch contains a polyol selected from the group consisting of sorbitol, erythritol, xylitol, mannitol and mixtures thereof, in an amount of 10 to 15 % by weight of the mixture.

6. Method according to claim 4 or 5, **characterized in that** the mixture for producing the thermoplastic starch contains, as polyol, sorbitol or erythritol in an amount of 10 to 15 % by weight of the mixture.

7. Method according to any one of claims 4 to 6, **characterized in that** the mixture for producing the thermoplastic starch contains the polyol in an amount of 13 to 15 % by weight of the mixture.

8. Method according to any one of claims 4 to 7, **characterized in that** the mixture for producing the thermoplastic starch contains epoxide to polyol in a ratio of 1 to 2 to 1 to 8, preferably 1 to 4 to 1 to 6, particularly preferably 1 to 5.

9. Method according to any one of claims 4 to 8, **characterized in that** the mixture for producing the thermoplastic starch further contains an acid, preferably a carboxylic acid selected from the group consisting of citric acid, malic acid, acetic acid or tartaric acid, in an amount of 0.1 to 1, preferably 0.1 to 0.5 % by weight of the mixture.

10. Method according to any one of claims 1 to 9, **characterized in that** the mixture for producing the thermoplastic starch is extruded at a temperature of 100-175°C, preferably in a twinscrew extruder with a separate vacuum zone in which the degassing takes place by applying negative pressure.

11. Compound produced by a method according to any one of claims 1 to 10 for use in the production of a transparent film.

12. Transparent film, produced by blow extrusion or flat film extrusion of a compound according to claim 11.

**Revendications**

1. Procédé de fabrication d'un composé ou d'un film contenant de l'amidon thermoplastique, un acide alpha-hydroxycarboxylique ROHCOOH, où R signifie CH$_2$ ou CH$_3$CH, de préférence l'acide lactique, en une quantité de 0,1 à 5, de préférence 0,1 à 3, de manière particulièrement préférée 0,1 à 1 % en poids par rapport à l'amidon thermoplastique, ainsi qu'un polymère thermoplastique, dans lequel procédé le composé ou le film est soumis à une étape de chauffage supplémentaire à 100-140 °C après son extrusion.

2. Procédé selon la revendication 1, **caractérisé en ce que** l'étape de chauffage supplémentaire après l'extrusion dure au moins 15 minutes, de préférence au moins 30 minutes, de manière particulièrement préférée au moins 60 minutes pour le composé et au moins 2 minutes, de préférence au moins 5 minutes, de manière particulièrement préférée au moins 60 minutes pour le film.

3. Procédé selon l'une des revendications 1 ou 2, **caractérisé en ce que** le polymère thermoplastique utilisé est un polymère choisi dans le groupe comprenant les polyoléfines, les polyamides, les polyuréthanes, les polyesters et leurs mélanges.

4. Procédé selon l'une des revendications 1 à 3, **caractérisé en ce que** pour la production de l'amidon thermoplastique, un mélange d'amidon avec un polyol, de préférence choisi dans le groupe comprenant le polyéthylène glycol, les monosaccharides, les alcools de sucre tels que le glycérol, le sorbitol, l'éry-thritol, le xylitol ou le mannitol et leurs mélanges, en une quantité de 10 à 25 % en poids du mélange, et un composé époxyde, choisi dans le groupe comprenant les huiles végétales époxydées telles que l'huile de soja, l'huile de lin, l'huile de tournesol, l'huile de colza et leurs mélanges, en une quantité de 0,1 à 6, de préférence 1 à 4,5, de manière particulièrement préférée 2,5 à 3,5 % en poids du mélange, est extrudé.

**5.** Procédé selon la revendication 4, **caractérisé en ce que** le mélange pour la production de l'amidon thermoplastique contient un polyol choisi dans le groupe constitué du sorbitol, de l'éry-thritol, du xylitol, du mannitol et leurs mélanges, en une quantité de 10 à 15 % en poids du mélange.

**6.** Procédé selon l'une des revendications 4 ou 5, **caractérisé en ce que** le mélange pour la production de l'amidon thermoplastique contient comme polyol du sorbitol ou de l'érythritol en une quantité de 10 à 15 % en poids du mélange.

**7.** Procédé selon l'une des revendications 4 à 6, **caractérisé en ce que** le mélange pour la production de l'amidon thermoplastique contient le polyol en une quantité de 13 à 15 % en poids du mélange.

**8.** Procédé selon l'une des revendications 4 à 7, **caractérisé en ce que** le mélange pour la production de l'amidon thermoplastique contient le composééépoxyde par rapport au polyol dans un rapport de 1 à 2 jusqu'à 1 à 8, de préférence 1 à 4 jusqu'à 1 à 6, de manière particulièrement préférée 1 à 5.

**9.** Procédé selon l'une des revendications 4 à 8, **caractérisé en ce que** le mélange pour la production de l'amidon thermoplastique contient en outre un acide, de préférence un acide carboxylique choisi dans le groupe constitué de l'acide citrique, l'acide malique, l'acide acétique ou l'acide tartrique, en une quantité de 0,1 à 1, de préférence 0,1 à 0,5 % en poids du mélange.

**10.** Procédé selon l'une des revendications 1 à 9, **caractérisé en ce que** le mélange pour la production de l'amidon thermoplastique est extrudé à une température de 100-175 °C, de préférence dans une extrudeuse à double vis avec une zone de vide séparée dans laquelle le dégazage s'effectue par application d'un vide.

**11.** Composé fabriqué par un procédé selon l'une des revendications 1 à 10 pour l'utilisation dans la fabrication d'un film transparent.

**12.** Film transparent, fabriqué par extrusion-soufflage ou extrusion de film plat d'un composé selon la revendication 11.

| Folie Glycerin-TPS/PBAT 1:1 - unbehandelt | Folie Glycerin-TPS/PBAT 1:1 additiviert mit Milchsäure 5% - unbehandelt | Folie Glycerin-TPS/PBAT 1:1 additiviert mit Milchsäure 5% – behandelt (130°C, 15 Minuten) |
|---|---|---|
| OPAZITÄT 25,38 | 7,2 | 2,46 |

**Fig. 1**: Optische Transparenz

**IN DER BESCHREIBUNG AUFGEFÜHRTE DOKUMENTE**

**In der Beschreibung aufgeführte Patentdokumente**

- US 5362777 A
- WO 9961524 A
- DE 19824968 A1
- WO 2012162085 A1
- WO 2009118665 A2
- EP 0596437 A2
- WO 2006042364 A1
- CN 107955212
- CN 103159984